# EUROPEAN PATENT APPLICATION

(11) **EP 1 768 325 A1**
(43) Date of publication of application: **28.03.2007**
(21) Application number: 05750831.9
(22) Date of filing: 14.06.2005
(51) Int. Cl.: H04L 12/56, H04Q 7/22

(54) **ROUTER DEVICE, SERVER DEVICE, AND HOME AGENT FUNCTION TRANSFER METHOD**

(30) Priority: 29.06.2004 JP 2004191852
(71) Applicant: Yaskawa Information Systems Corporation, Kitakyushu-shi, Fukuoka 8060037 (JP); KABUSHIKI KAISHA YASKAWA DENKI, Kitakyushu-Shi, Fukuoka 806-0004 (JP)
(72) Inventor: OHGUSHI, Kouichiro., c/o Yaskawa Inf.Syst.Corporat, Kitakyushu-shi, Fukuoka 806-0037 (JP)
(74) Representative: Grünecker, Kinkeldey, Stockmair & Schwanhäusser Anwaltssozietät
(86) International application number: PCT/JP2005/010885
(87) International publication number: WO 2006/001197

(57) **Abstract**

An HA function can be stopped and restarted without having an influence on MN performing registration and other nodes.

The HA function is transferred and controlled by procedures established by an IP address managing procedure for operating plural IP addresses and stopping this operation, an IP address transfer control request procedure for transferring and controlling the IP address and an IP address transfer control response procedure (A12, A17), a tunneling procedure for establishing a bidirectional tunnel and transmitting and receiving a packet formed as a capsule, an IPsec transfer control request procedure for transferring and controlling an IPsec function and an IPsec transfer control response procedure (A13, A18), a registration transfer control request procedure for transferring and controlling registration by HA with respect to another HA and a registration transfer control response procedure (A14, A19).

## Description

### Technical Field

The present invention relates to a technique relating to a mobile IP network system, and particularly relates to a router unit, a server unit and a home agent function transfer control method having the home agent functions for minimizing an influence on communication between a mobile node and a correspondent node, specifically, in case of the home agent being contemplated to stop its function, and for transferring the home agent function of this home agent to another home agent.

### Background Art

As for a mobile terminal (which is so called a mobile node and hereinafter called MN) which is moved with changing the place in use according to the location in a move, and is connected to the Internet, an IP address (which is a home address and hereinafter called HoA) allocated by a belonging home link is set to an intrinsic address thereof, and communication is performed by using this HoA. However, if MN is moved to another link (which is a foreign link), any HoA can not be used. Accordingly, communication must be performed by a newly acquired IP address which is so called care-of address (hereinafter called CoA) at the foreign link.
As its alternative way, a measure capable to use HoA as the intrinsic address even when MN is moved to the foreign link is developed nowadays. Namely, a mobile IPv4 network system (non-patent literature 1) and a mobile IPv6 network system (non-patent literature 2) are proposed and are partially practically used.

Therefore, such a conventional general mobile IP network system will be explained in accordance with the drawings.

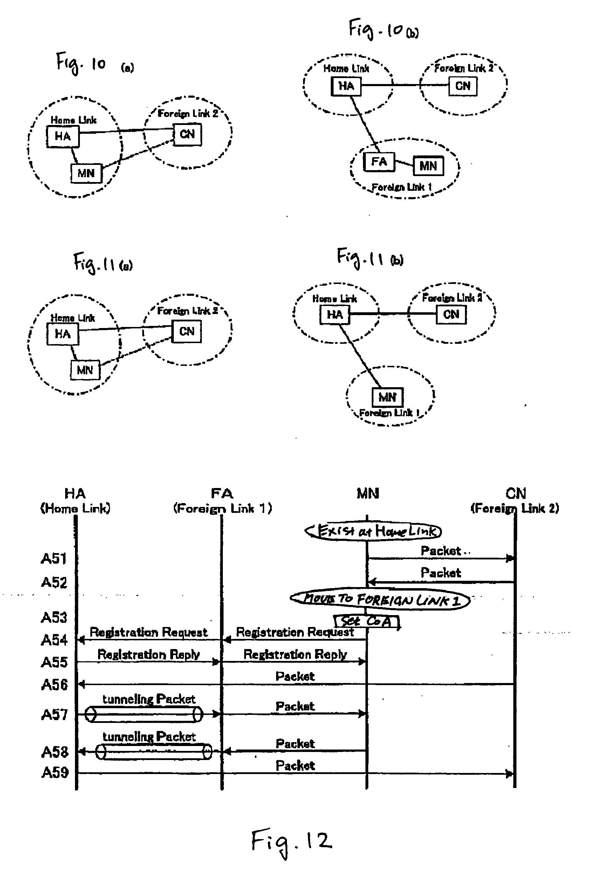

Figs. 10 and 11 respectively show the connecting states of the mobile IPv4 network system and the mobile IPv6 network system, and the home link and foreign links 1, 2 are mutually connected. In these figures, Fig. 10(a) or Fig. 11(a) shows the connecting state before MN is moved outside, and Fig. 10(b) or 11(b) shows the connecting state after MN is moved from one home link to foreign link
1. After the movement, there provided a home agent (hereinafter called HA) in the home link, and MN is located in foreign link 1, and there provided a correspondent node (hereinafter called CN) in foreign link
2. This CN has a function for recognizing a packet which is intrinsic for the mobile IP. In the case of the mobile IPv4 network system, a foreign agent (hereinafter called FA) exists on foreign link 1.
Among these connecting states, when MN is located in the home link before the movement, MN performs an operation similar to that of the normal IP terminal. Further, once MN is moved and is located in foreign link 1, MN can directly utilize HoA acquired in the home link as the intrinsic address. In any network system, MN can communicate with CN through HA.

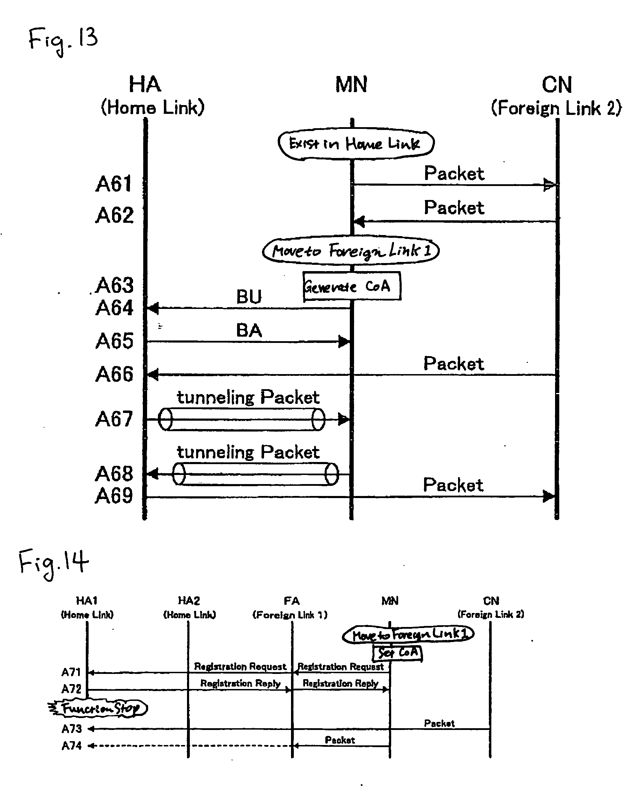

Next, an operation performed when MN is moved from the home link to another link will be explained. Figs. 12 and 13 are respectively views for explaining a general processing procedure when MN is moved in the mobile IPv4 network system and the mobile IPv6 network system.
In these figures, when MN is located in the home link before the movement, MN is directly communicating with CN (A51, A52, A61, A62). Next, when MN is moved from the home link to foreign link 1, MN newly acquires an IP address (hereinafter called CoA) usable in this foreign link 1 (A53, A63). When MN acquires CoA, MN establishes registration with respect to HA, and registers a packet of a HoA destination transmitted from another communication node so as to be transferred to a CoA destination (A54, A55, A64, A65).
At this time, a bidirectional tunnel is established between FA and HA in the case of the mobile IPv4 network system, and a bidirectional tunnel is established between MN and HA in the case of the mobile IPv6 network system. Accordingly, IPsec communication using the bidirectional tunnel can be performed between MN and HA, or between FA and HA.
Thereafter, HA intercepts the packet transmitted from CN located in foreign link 2 to the HoA destination of MN in the home link (A56, A66). This packet is formed as a capsule by a packet header of the CoA destination, and is tunneled and transferred to MN (A57, A67).
In the mobile IPv4 network system having FA in the foreign link, when FA receives the tunneling packet, the capsule formation is released and the tunneling packet is transferred to MN (A57). Further, in the mobile IPv4 network system having no FA in the foreign link, or in the mobile IPv6 network system, when MN receives the tunneling packet, the capsule formation is released and the tunneling packet is processed as a packet of the HoA destination which is an inner packet (A67).

In contrast with this, if reverse tunneling can be used in the case of mobile IPv4 when the packet using HoA in a transmission source of the packet is transmitted from MN, FA forms this packet as a capsule by the packet header of a HA destination, and the reverse tunneling is performed with respect to HA (A58). In the case of mobile IPv6, MN forms this packet as a capsule by the packet header of the HA destination, and the reverse tunneling is performed with respect to HA (A68). When HA receives the reverse tunneling packet, HA releases the capsule formation and transmits the packet using HoA to the transmission source of the inner packet (A59, A69).
When MN is further moved to another link, an IP address usable in the link of a moving destination is acquired, and the above procedure is repeated. Thus, even when MN is moved between plural foreign links except for the home link, communication can be always performed between another CN and MN by using HoA.
Non-patent literature 1: C. Perkins, Ed., "IP Mobility Support for IPv4 (RFC3344)", 2002: (URL, 1118634584549_0.txt, or http://www.ietf.org/rfc/rfc3344.txt)
Non-patent literature 2: D. Johnson, C. Perkins, J. Arkko, "Mobility Support in IPv6 (Internet Draft)", June 30, 2003: (URL, 1118634S84S49_1.txt, or http://www.ietf.org/rfc/rfc3775.txt)

### Disclosure of the Invention

### Problems that the Invention is to Solve

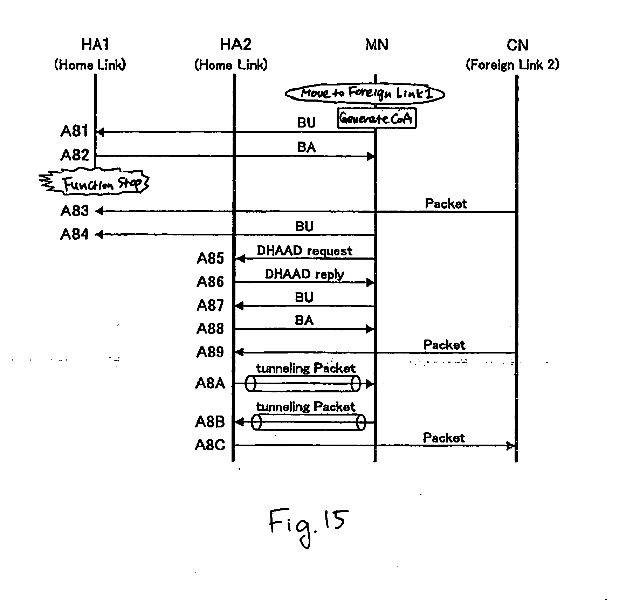

In the above prior art, in a state in which registration is executed in HA when MN is located in the foreign link, when this HA stops a function, i.e., when this HA cannot be used since the electric power source of a server is turned off to perform maintenance as one concrete example, no means for notifying stoppage of the function of HA itself to MN exists even when HA knows that the self function stops in advance.
Further, in the mobile IPv4 network system, as shown in Fig. 14, after HA stops the function, no means for recognizing new HA by MN exists in standard.
Further, in the mobile IPv6 network system, as shown in Fig. 15, when it is recognized that there is no response from HA even when MN transmits a message to HA after HA stops the function (A84), the procedure of Dynamic Home Agent Address Discovery (DHAAD) is executed to retrieve another HA functioning on the home link, and the existence of new HA is recognized (A85, A86).
Thereafter, MN transmits a BU message to the new HA (A87), and registration is again established, and communication using HoA can be restarted (A89, A8A).
However, a period having no registration exists while MN executes the DHAAD procedure and registration is established with respect to the new HA after HA actually stops the function. Therefore, a problem exists in that MN cannot perform communication using HoA during this period.

An object of the present invention is to solve such problems of the prior art, and is to be capable to stop the function of HA without making MN executing registration and its communication partner conscious of this execution even when this MN exists in HA, and is to be capable to make HA function similarly to a case before the stoppage when HA then restarts the function.

### Means for Solving the Problems

Therefore, first, third and fifth inventions reside in a mobile IP network system in which a mobile node on a home link having plural home agents executes registration from a foreign link of a moving destination to a first home agent, and a home address of the mobile node is registered so that a packet can be transferred by using the home address even when the mobile node is located in another link except for the home link;
wherein a network interface capable to set plural IP addresses is arranged in the plural home agents, and a home agent function for transferring a function of the first home agent to a second home agent is arranged by the following procedures of:
(1) newly setting a second IP address for the first home agent by the first home agent, and starting communication at this second IP address, and stopping communication using a first IP address used in the home link so far by the first home agent (IP address managing procedure);
(2) transferring the first IP address stopping communication by the first home agent to the second home agent (IP address transfer control request procedure);
(3) establishing a bidirectional tunnel used for IPsec transfer control between the first home agent and the second home agent, and setting communication using a packet formed as a capsule so as to be performed (tunneling procedure);
(4) transferring information of security association and security policy database held by the first home agent to the second home agent by using the bidirectional tunnel (IPsec transfer control request procedure); and
(5) transferring registration registered to the first home agent by the mobile node to the second home agent (registration transfer control request procedure).
   Further, second, fourth and sixth inventions reside in a mobile IP network system in which, when a second home agent executes plural home agent functions by using plural IP addresses, a mobile node executes registration from a foreign link of a moving destination to the second home agent, and a home address of the mobile node is registered so that a packet can be transferred by using the home address even when the mobile node is located in another link except for the home link;
wherein a network interface capable to set plural IP addresses is arranged in the plural home agents, and a home agent function for transferring a function of the second home agent to the first home agent is arranged by the following procedures of:
(1) requesting the second home agent for transfer control of the IP address by the first home agent, and receiving the IP address used by the second home agent so as to be set to a network interface by the first home agent (IP address transfer control response procedure);
(2) establishing a bidirectional tunnel used for IPsec transfer control between the first home agent and the second home agent, and setting communication using a packet formed as a capsule so as to be performed (tunneling procedure);
(3) receiving a transfer control request of security association and security policy database from the second home agent by the first home agent using the bidirectional tunnel so as to be usable (IPsec transfer control response procedure); and
(4) receiving a transfer control request of registration from the second home agent by the first home agent, and setting this registration to registration of the first home agent (registration transfer control response procedure).

Since the present invention is established in this way, the mobile node executing registration can perform communication by using a home address without any consciousness at all even when the first home agent restarts a function. Further, CN as a communication partner of the mobile node can also continue the communication with the mobile node on the home agent.

### Effect of the Invention

In accordance with the first, third and fifth inventions, it is possible to stop the home agent function and restart this function without making MN executing registration and CN of its communication partner conscious of this execution even when this MN exists in HA.
Further, in accordance with the second, fourth and sixth inventions, MN can continue communication using HoA since registration executed by this MN also always exists when HA stops and restarts the function.

### Brief Description of the Drawings

Fig. 1 is a sequence view showing a processing summary of an HA function transfer control method of the present invention.
Fig. 2 is a view showing the structure of an IPv6 network system for explaining the method of the present invention.
Fig. 3 is a sequence view showing a processing procedure in accordance with first, third and fifth inventions.
Fig. 4 is a sequence view showing a processing procedure in accordance with second, fourth and sixth inventions.
Fig. 5 is a sequence view showing a packet transfer method during registration transfer control.
Fig. 6 is a flow chart showing an IP address transfer control method of the first, third and fifth inventions.
Fig. 7 is a view showing a structural example of a BU message packet used in a registration transfer control method of the first, third and fifth inventions.
Fig. 8 is a flow chart showing an IP address transfer control method of the second, fourth and sixth inventions.
Fig. 9 is a view showing a structural example of a BU message packet used in a registration transfer control method of the second, fourth and sixth inventions.
Fig. 10 is a view showing a structural example of a mobile IPv4 network system for explaining an operation of the prior art.
Fig. 11 is a view showing a structural example of a mobile IPv6 network system for explaining an operation of the prior art.
Fig. 12 is a sequence view showing a processing procedure at an MN moving time in the conventional mobile IPv4 network system.
Fig. 13 is a sequence view showing a processing procedure at the MN moving time in the conventional mobile IPv6 network system.
Fig. 14 is a sequence view showing a processing procedure at a HoA function stopping time in the conventional mobile IPv4 network system.
Fig. 15 is a sequence view showing a processing procedure at the HoA function stopping time in the conventional mobile IPv6 network system.

### Description of the Reference Numerals and Signs

HA, HA1, HA2 Home Agent
HoA Home Address
CoA Care-of Address
FA Foreign Agent
MN Mobile Node
CN Correspondent Node

### Best Mode for Carrying Out the Invention

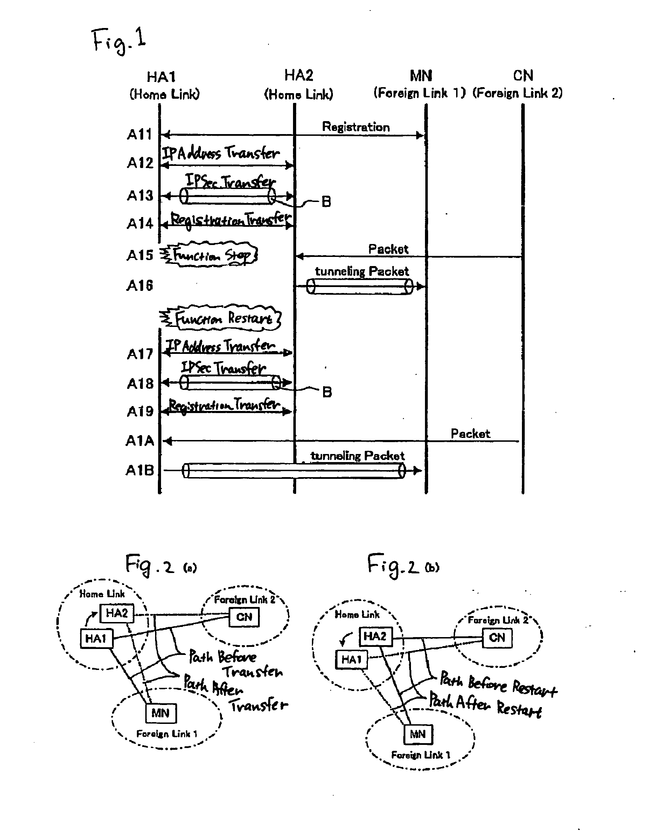

Next, embodiments in a mobile IPv6 network system as embodiment modes of the present invention will be explained on the basis of Figs. 1 to 9.

### Embodiment 1

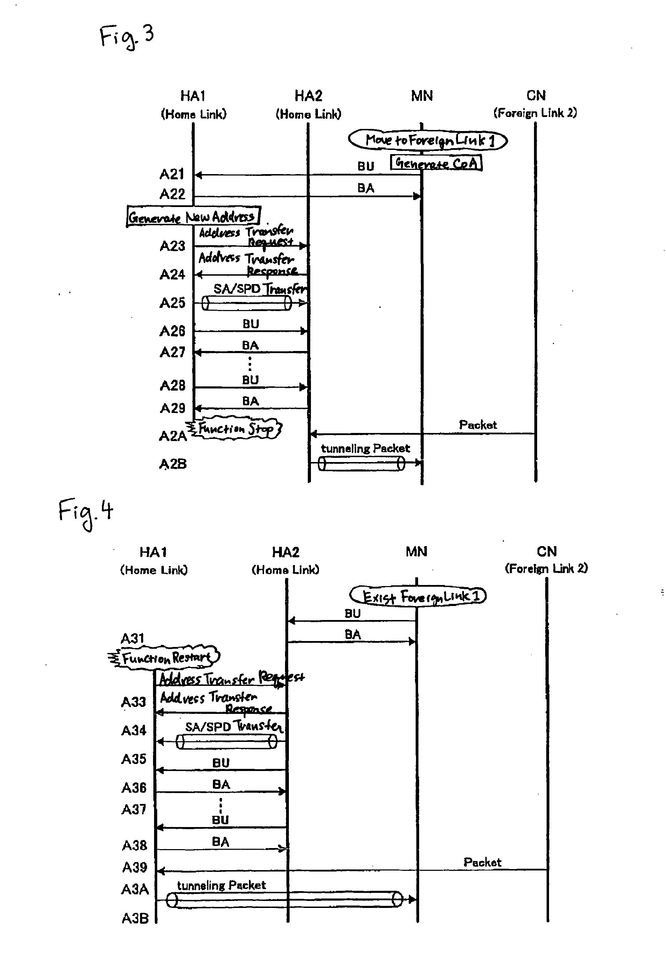

First, the entire operation of the mobile IPv6 network system will be explained by using Figs. 1 and 2. Figs. 1 and 2 are respectively a sequence view and a network connection view for explaining the entire image of a home agent function transfer control method of the present invention.
An upper half of Fig. 1 and Fig. 2(a) are views for explaining an operation performed until HA stops a function. A lower half of Fig. 1 and Fig. 2(b) are views for explaining an operation performed until HA stopping the function restarts the function.
When HA1 stops a function, HA1 is operated as follows. If it is known that the operation of HA1 stops when MN is performing registration (A11), an IP address is newly arranged, and the IP address used so far is stopped and is delivered to HA2 (A12). Next, a tunnel is arranged between HA1 and HA2, and IPsec transfer control is performed (A13), and registration of HA1 is transferred to HA2 (A14). Thus, the home agent function is transferred from HA1 to HA2, and communication can be thereafter performed through HA2 between MN and CN.
When the function of HA1 stopping the function is returned and HA1 is restarted, HA1 is operated as follows. First, HA1 receives an IP address from HA2 (A17), and a tunnel is arranged between HA1 and HA2, and IPsec transfer control is performed (A18), and registration of HA2 is transferred to HA1 (A1A). Thus, the home agent function is returned from HA2 to HA1, and communication can be thereafter performed through HA1 between MN and CN.
Next, a processing procedure until HA1 stops the function will be explained slightly in detail by using Fig. 3. Fig. 3 is a sequence view when plural HAs programming the HA function transfer control method of the present invention on a home link exist (HA1, HA2), and MN exists in foreign link 1, and HA1 stops the function when registration is executed in HA1 (A21).
First, HA1 acquires information of HA2 from a home agent list held in HA1 itself. When an IPv6 address used by HA1 is set to HA1_addr and an IPv6 address used by HA2 is set to HA2_addr, HA1 generates new IPv6 address HA1'_ addr by using an address generating system mounted to HA1 itself, and sets this address to a state usable in HA1.

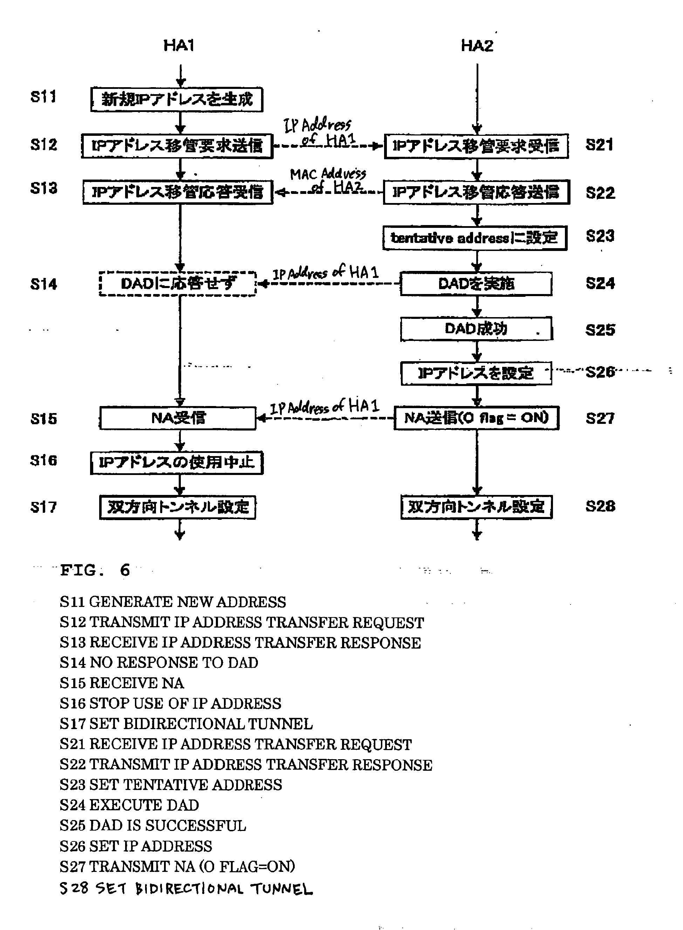

Next, HA1 transfers address HA1_addr to HA2 by an IPv6 address transfer control procedure. Fig. 6 shows the processing procedure of HA1 and HA2 at that time (A23 to A24), and this processing procedure is set as follows.
First, HA1 transmits an IPv6 address transfer control request message to HA2, and notifies IPv6 address HA1_addr as a transfer control object (S12). When HA2 receives this request message (S21), HA2 transmits an IPv6 address transfer control response message to HA1 so as to notify that it can be received with respect to the transfer control request (S22). When HA1 receives the IPv6 address transfer control response message (S13), HA1 temporarily interrupts the use of IPv6 address HA1_addr.
HA2 sets IPv6 address HA1_addr as a temporary IPv6 address (S23), and executes duplicate address detection '(DAD) with respect to IPv6 address HA1_addr (S24). When HA1 confirms that a transmission source MAC address of a DAD packet is provided from HA2, HA1 makes no response to DAD (S14). When DAD is successful (S25), HA2 sets IPv6 address HA1_addr to a usable state (S26), and also sets IPv6 address HA1_addr to a target address, and transmits a neighbor advertisement (NA) message for setting an override flag to ON to a link-local multicast address destination (S27). Thus, it is required so as to overwrite the contents of a neighbor cache to another node within the home link. When HA1 confirms that HA1 receives its NA message (S15) and a transmission source MAC address is provided from HA2, HA1 stops the use of address HA1_ addr (S16). Thereafter, if HA1 and HA2 set a bidirectional tunnel (S17, S18), HA1 can perform communication by using IPv6 address HA1'_addr and HA2 can perform communication by newly using HA1_addr.

When this is set to correspond to Fig. 3, the bidirectional tunnel is established between IPv6 address HA1'_addr of HA1 and IPv6 address HA1_addr of HA2 after the transfer control (A23, A24) of the IPv6 address is completed.
Next, when HA1 transmits an IPsec transfer control request of security association (SA) and security policy database (SPD) to HA2 (A25), HA2 sets SA/SPD so as to use an IPsec function at IPv6 address HA1_addr, and IPv6 address HA1_addr used between HA1 and MN can be used.

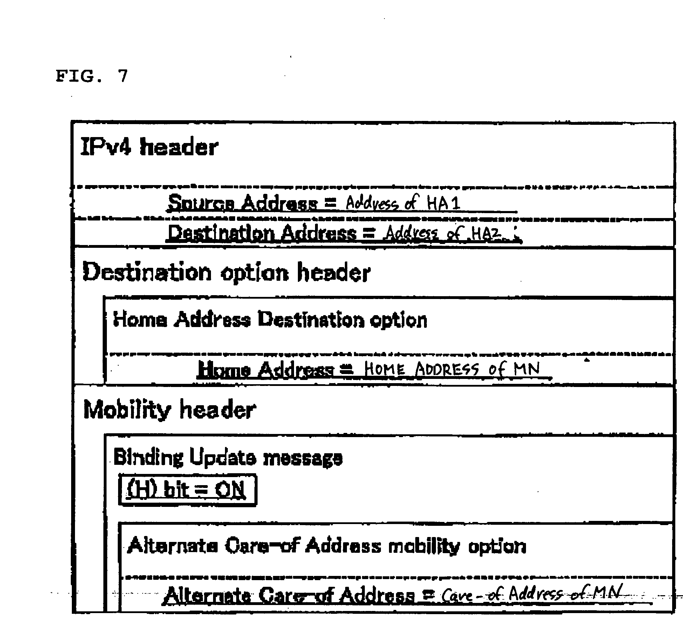

HA1 retrieves its own binding cache (hereinafter called BC), and acquires registered information, and generates a binding update (hereinafter called BU) message, and transmits this message to HA2 (S26). The packet at this time is established as shown in Fig. 7. IPv6 address HA1'_addr of HA1 is set to a transmission source address, and IPv6 address HA1_addr of HA2 is set to a transmission destination address. HoA of MN is set to a home address destination option, and CoA of MN is set to an alternate care-of address mobility option.

When HA1 transmits a BU message and HA2 receives the BU message (S26), the IPv6 address set to the home address destination option is registered to BC as HoA of MN, and the IPv6 address set to the alternate care-of address mobility option is registered to BC as CoA of MN. Settings and processings except for these setting and processing are performed similarly to those of the normal BU message.
When HA2 completes preparation operated as HA of MN registered to BC, HA2 transmits a binding acknowledgement (hereinafter called BA) message to HA1 (A27).
HA1 and HA2 next execute the above registration transfer control procedure with respect to all BC entries registered to HA1 (S29).

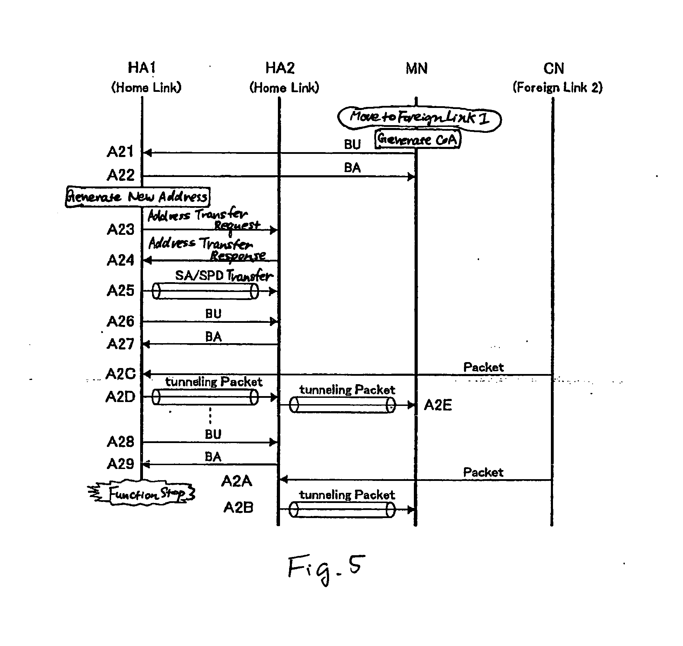

Fig. 5 shows a processing procedure when registration is transferred from HA1 to HA2, and the packet of a HoA destination of MN registered to the BC entry not transferred yet is transmitted. When the HoA destination packet of MN is transmitted from CN (A2C), HA1 intercepts this packet and retrieves BC. The header of a CoA destination is then formed as a capsule as an outer header from acquired information of MN, and the header of a HA1_addr destination as an address of HA2 is formed as a capsule as an outer header. The capsuled packet is transmitted to HA2 by utilizing the bidirectional tunnel (A2D).
When HA2 receives this packet, HA2 releases the capsule formation of a first stage, and sets this packet to a packet of the CoA destination and performs tunneling toward MN (A2E).
Thus, registration of MN is normally performed even when no registration transfer control with respect to all the BC entries registered to BC of HA1 is terminated.
When the registration transfer control with respect to all the BC entries registered to BC of HA1 is completed (A29), HA1 stops the home agent function.
Thereafter, HA2 intercepts the packet (A2A) of the HoA destination of MN, and this packet is tunneled to the CoA destination of MN (A2B). Conversely, when HA2 receives the packet reverse-tunneled from MN to HA1_addr destination, its inner packet is transmitted to a communication destination.

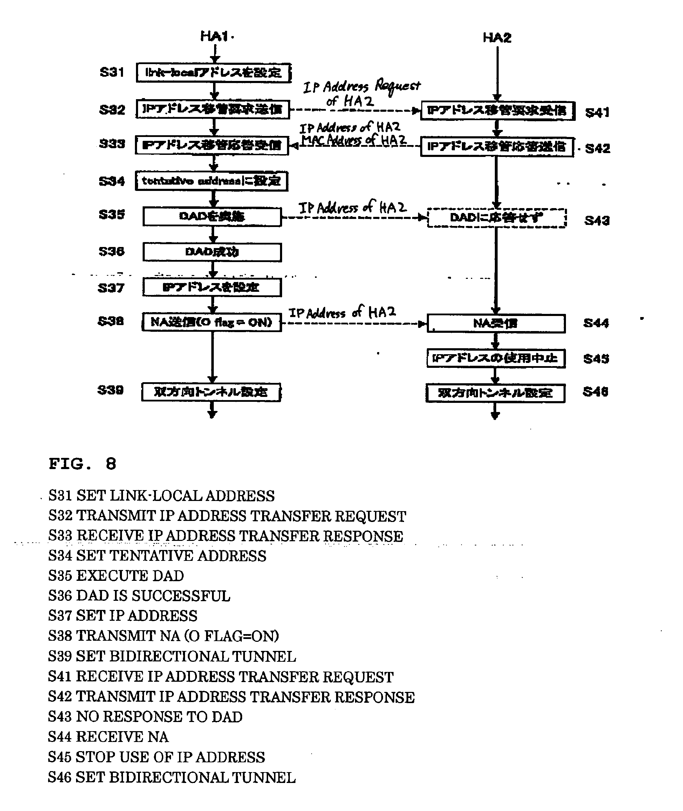

Next, Fig. 4 is a sequence view when HA1 stops the home agent function in the above procedure and then again restarts the home agent function.
First, HA1 executes DAD with respect to a link-local address used by HA1. As its result, if the link-local address can be used, an address transfer control procedure is started to transfer and return IPv6 address HA1_addr from HA2 to HA1 (A33, A34). Fig. 8 shows the processing procedures of HA1 and HA2 of A33, A34 at that time, and these processing procedures will be sequentially explained.

First, HA1 transmits a transfer control request of IPv6 address HA1_addr used by HA2 to HA2 (S32). When HA2 receives this transfer control request (S41), HA2 transmits an address transfer control response showing reception of the request to HA1 (S42). Thereafter, HA2 temporarily interrupts the use of IPv6 address HA1_addr.
HA1 sets IPv6 address HA1_addr as a temporary IPv6 address (S34), and executes DAD with respect to IPv6 address HA1_addr (S35). When HA2 confirms that a transmission source MAC address of the DAD packet is provided from HA1, HA2 makes no response to this DAD (S43). When DAD is successful (S36), HA1 sets IPv6 address HA1_ addr to a usable state (S37), and also sets IPv6 address HA1_addr to a target address, and transmits an NA message for setting an override flag to ON to a link-local multicast address destination. Thus, it is required so as to overwrite the contents of a neighbor cache to another node within the home link (S38). When HA2 receives this NA message (S44) and confirms that the transmission source MAC address is an address of HA1, HA2 stops the use of address HA1_addr (S45). Thereafter, when HA1 and HA2 set a bidirectional tunnel (S39, S46), HA1 can perform communication with HA1_addr as a global address.

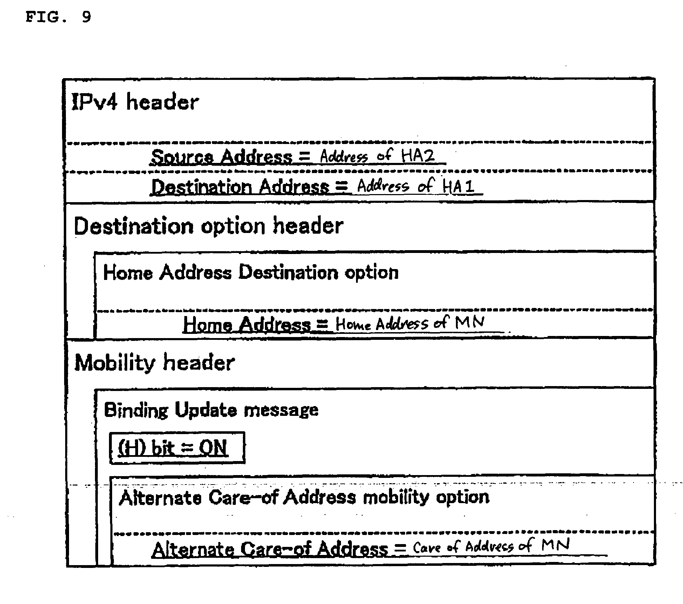

When this is set to correspond to Fig. 4, the bidirectional tunnel is established between IPv6 address HA1_addr of HA1 and IPv4 address HA2_addr of HA2 after the transfer control (A33, A34) of the IPv6 address is completed.
Next, when HA2 transmits an IPsec transfer control request of SA and SPD to HA1 (A35), HA1 sets SA/SPD so as to use an IPsec function at IPv6 address HA1_addr, and IPsec at IPv6 address HA1_addr used between HA2 and MN can be used.
HA2 retrieves its own BC and acquires information registered to IPv6 address HA1_addr, and generates and transmits a BU message of a HA1 destination (A36). A packet structural example at this time is provided as shown in Fig. 9. IPv6 address HA2_addr of HA2 is set to a transmission source address, and IPv6 address HA1_addr of HA1 is set to a transmission destination address. HoA of MN is set to a home address destination option, and CoA of MN is set to an alternate care-of address mobility option.

When HA2 transmits the BU message and HA1 receives the BU message, the IPv6 address set to the home address destination option is set to HoA of MN, and the IPv6 address set to the alternate care-of address mobility option is registered to BC as CoA of MN. Settings and processings except for these setting and processing are performed similarly to those of the normal BU message.
When HA1 completes preparation operated as HA of MN registered to BC, HA1 transmits a BA message to HA2 (A37).
HA2 and HA1 next execute the above registration transfer control procedure with respect to all BC entries registered to HA2 (A39).

When the registration transfer control with respect to all the BC entries registered to BC of HA2 is completed as mentioned above (A39), HA1 thereafter intercepts the packet (A3A) of a HoA destination of MN and this packet is tunneled to a CoA destination of MN (A3B). In contrast with this, when HA1 receives a packet reverse-tunneled from MN to the HA1_addr destination, its inner packet is transmitted to a communication destination.
In accordance with the procedure explained above, after HA1 stops a function, registration of MN always exists while HA1 further restarts the function. Accordingly, communication using HoA can be continued without making MN and CN of a communication partner conscious of stoppage/restart of the function of HA1 at all.

The present invention has been explained in detail with reference to the specific embodiment modes, but it is apparent from persons skilled in the art that the present invention can be variously modified and corrected without departing from the spirit and scope of the present invention.
The present application is based on Japanese patent application No. 2004-191852 filed on June 29, 2004, and its contents are taken-in here as reference.

### Industrial Applicability

In HA in which registration is particularly already executed by plural MNs within a server unit or a router unit having the HA function in the mobile IP network system, necessity for temporarily or permanently stopping the HA function is generated, e.g., when maintenance of HA is performed, and the function is stopped by a certain trouble, or the system is reestablished and version-up of a product is performed, etc. In this case, it is useful as a procedure capable to stop the HA function and restarting the HA function without having an influence on communication of MN already registered to this HA.

## Claims

1. A server unit in a mobile IP network system in which a mobile node on a home link having plural home agents executes registration from a foreign link of a moving destination to a first home agent, and a home address of said mobile node is registered so that a packet can be transferred by using said home address even when said mobile node is located in another link except for said home link;
wherein a network interface capable to set plural IP addresses is arranged in said plural home agents, and the server unit has a home agent function for transferring a function of said first home agent to a second home agent by the following procedures of:
(1) newly setting a second IP address for said first home agent by said first home agent, and starting communication at this second IP address, and stopping communication using a first IP address used in the home link so far by said first home agent (IP address managing procedure);
(2) transferring said first IP address to said second home agent (IP address transfer control request procedure);
(3) establishing a bidirectional tunnel used for IPsec transfer control between said first home agent and said second home agent, and setting communication using a packet formed as a capsule so as to be performed (tunneling procedure);
(4) transferring information of security association and security policy database held by said first home agent to said second home agent by using said bidirectional tunnel (IPsec transfer control request procedure); and
(5) transferring registration registered to said first home agent by said mobile node to said second home agent (registration transfer control request procedure).

2. A server unit in a mobile IP network system in which, when a second home agent executes plural home agent functions by using plural IP addresses, a mobile node executes registration from a foreign link of a moving destination to the second home agent, and a home address of said mobile node is registered so that a packet can be transferred by using said home address even when said mobile node is located in another link except for said home link;
wherein a network interface capable to set plural IP addresses is arranged in said plural home agents, and the server unit has a home agent function for transferring a function of the second home agent to said first home agent by the following procedures of:
(1) requesting said second home agent for transfer control of the IP address by said first home agent, and receiving the IP address used by said second home agent to be set to a network interface by said first home agent (IP address transfer control response procedure);
(2) establishing a bidirectional tunnel used for IPsec transfer control between said first home agent and said second home agent, and setting communication using a packet formed as a capsule so as to be performed (tunneling procedure);
(3) receiving a transfer control request of security association and security policy database from said second home agent by said first home agent using said bidirectional tunnel so as to be usable (IPsec transfer control response procedure); and
(4) receiving a transfer control request of registration from said second home agent by said first home agent, and setting this registration to registration of said first home agent (registration transfer control response procedure).

3. A router unit in a mobile IP network system in which a mobile node on a home link having plural home agents executes registration from a foreign link of a moving destination to a first home agent, and a home address of said mobile node is registered so that a packet can be transferred by using said home address even when said mobile node is located in another link except for said home link;
wherein a network interface capable to set plural IP addresses is arranged in said plural home agents, and the router unit has a home agent function for transferring a function of said first home agent to a second home agent by the following procedures of:
(1) newly setting a second IP address for said first home agent by said first home agent, and starting communication at this second IP address, and stopping communication using a first IP address used in the home link so far by said first home agent (IP address managing procedure);
(2) transferring said first IP address to said second home agent (IP address transfer control request procedure);
(3) establishing a bidirectional tunnel used for IPsec transfer control between said first home agent and said second home agent, and setting communication using a packet formed as a capsule so as to be performed
(tunneling procedure);
(4) transferring information of security association and security policy database held by said first home agent to said second home agent by using said bidirectional tunnel (IPsec transfer control request procedure); and
(5) transferring registration registered to said first home agent by said mobile node to said second home agent (registration transfer control request procedure).

4. A router unit in a mobile IP network system in which, when a second home agent executes plural home agent functions by using plural IP addresses, a mobile node executes registration from a foreign link of a moving destination to the second home agent, and a home address of said mobile node is registered so that a packet can be transferred by using said home address even when said mobile node is located in another link except for said home link;
wherein a network interface capable to set plural IP addresses is arranged in said plural home agents, and the router unit has a home agent function for transferring a function of the second home agent to said first home agent by the following procedures of:
(1) requesting said second home agent for transfer control of the IP address by said first home agent, and receiving the IP address used by said second home agent so as to be set to a network interface by said first home agent (IP address transfer control response procedure);
(2) establishing a bidirectional tunnel used for IPsec transfer control between said first home agent and said second home agent, and setting communication using a packet formed as a capsule so as to be performed (tunneling procedure);
(3) receiving a transfer control request of security association and security policy database from said second home agent by said first home agent using said bidirectional tunnel so as to be usable (IPsec transfer control response procedure); and
(4) receiving a transfer control request of registration from said second home agent by said first home agent, and setting this registration to registration of said first home agent (registration transfer control response procedure).

5. A home agent function transfer control method in a mobile IP network system in which a mobile node on a home link having plural home agents executes registration from a foreign link of a moving destination to a first home agent, and a home address of said mobile node is registered so that a packet can be transferred by using said home address even when said mobile node is located in another link except for said home link;
wherein a network interface capable to set plural IP addresses is arranged in said plural home agents, and a function of said first home agent is transferred to a second home agent by the following procedures of:
(1) newly setting a second IP address for said first home agent by said first home agent, and starting communication at this second IP address, and stopping communication using a first IP address used in the home link so far by said first home agent (IP address managing procedure);
(2) transferring said first IP address to said second home agent (IP address transfer control request procedure);
(3) establishing a bidirectional tunnel used for IPsec transfer control between said first home agent and said second home agent, and setting communication using a packet formed as a capsule so as to be performed (tunneling procedure);
(4) transferring information of security association and security policy database held by said first home agent to said second home agent by using said bidirectional tunnel (IPsec transfer control request procedure); and
(5) transferring registration registered to said first home agent by said mobile node to said second home agent (registration transfer control request procedure).

6. A home agent function transfer control method in a mobile IP network system in which, when a second home agent executes plural home agent functions by using plural IP addresses, a mobile node executes registration from a foreign link of a moving destination to the second home agent, and a home address of said mobile node is registered so that a packet can be transferred by using said home address even when said mobile node is located in another link except for said home link;
wherein a network interface capable to set plural IP addresses is arranged in said plural home agents, and a function of the second home agent is transferred to said first home agent by the following procedures of:
(1) requesting said second home agent for transfer control of the IP address by said first home agent, and receiving the IP address used by said second home agent so as to be set to a network interface of said first home agent (IP address transfer control response procedure);
(2) establishing a bidirectional tunnel used for IPsec transfer control between said first home agent and said second home agent, and setting communication using a packet formed as a capsule so as to be performed (tunneling procedure);
(3) receiving a transfer control request of security association and security policy database from said second home agent by said first home agent using said bidirectional tunnel so as to be usable (IPsec transfer control response procedure); and
(4) receiving a transfer control request of registration from said second home agent by said first home agent, and setting this registration to registration of said first home agent (registration transfer control response procedure).
